# EUROPÄISCHE PATENTSCHRIFT

(11) **EP 3 371 494 B1**
(45) Veröffentlichungstag und Bekanntmachung des Hinweises auf die Patenterteilung: **11.09.2019**
(21) Anmeldenummer: 16781098.5
(22) Anmeldetag: 11.10.2016
(51) Int. Cl.: F16K 31/143, B65D 90/34, F16K 24/00, F16K 24/06, F16K 27/02

(54) **TANKSICHERUNGSARMATUR UND TANK**
TANK PROTECTION VALVE AND TANK
PIÈCE DE ROBINETTERIE DE SÉCURITÉ POUR CUVE ET CUVE

(30) Priorität: 06.11.2015 DE 102015221896
(43) Veröffentlichungstag der Anmeldung: 12.09.2018
(73) Patentinhaber: Evoguard GmbH, 93149 Nittenau (DE)
(72) Erfinder: SAUER, Martin, 93149 Nittenau (DE)
(74) Vertreter: Grünecker Patent- und Rechtsanwälte PartG mbB
(86) Internationale Anmeldenummer: PCT/EP2016/074261
(87) Internationale Veröffentlichungsnummer: WO 2017/076582

(56) Entgegenhaltungen:
- AU-B2- 618 316
- US-A- 3 724 707
- US-A1- 2011 056 938

## Beschreibung

Die Erfindung betrifft eine Tanksicherungsarmatur gemäß Oberbegriff des Anspruchs 1 und einen Tank gemäß Anspruch 11.

Bei der Produktion flüssiger Lebensmittel, insbesondere in Brauereien, werden, z.B. bei Getränkeabfüllanlagen, Tanks mit einem Volumen bis zu 800 m³ eingesetzt, die nur begrenzte Festigkeit gegen Unterdruck haben. Gründe für das Entstehen eines Unterdrucks sind beispielsweise eine Systementleerung mittels Pumpe, ein unbeabsichtigtes Entleeren des Systems, oder physikalische Zustandsänderungen des bevorrateten Mediums und/oder Gärungsvorgänge, und dergleichen. Ein zulässiger Unterdruck in solchen Tanks beträgt oftmals nur 10 mbar. Zur Unterdruckabsicherung werden, beispielsweise in Tanksicherungsarmaturen, Vakuumventile in unterschiedlichen Baugrößen verwendet, welche einen Ansprechdruck von nur 3 bis 4 mbar haben und einen entsprechenden hohen Volumendurchsatz aufweisen. Es werden für größere Tanks nahezu ausschließlich gewichtsbelastete Vakuumventile eingesetzt, die mit senkrecht stehender Ventilstange verbaut sind, um die Reibung zu reduzieren und das Ansprechverhalten zu gewährleisten. Es gibt auch federbelastete Vakuumventile, die stehend verbaut sind, wobei hier das Nennweitenspektrum begrenzt ist, so dass senkrecht verbaute, federbelastete Vakuumventile für die Absicherung größerer Tanks nicht in Frage kommen. Die Vakuumventile sollen sitzreinigungsfähig sein und weisen meist eine Anlüftvorrichtung auf. Eine einwandfreie Reinigung ist erforderlich, da ein verschmutzter Dichtsitz zum Ankleben des Ventiltellers führen kann, so dass der Ansprechdruck den zulässigen Tankdruck überschreitet. Bei der Reinigung durch den Dichtsitz strömendes Medium wird bei einigen Vakuumventilen durch eine Fangschale aufgefangen und kontrolliert abgeführt. Bei gewichtsbelasteten Vakuumventilen ist aufgrund der Bauform eine Auffangvorrichtung für das Reinigungsmedium nicht vorhanden.

Beim Zusammenfassen von Armaturen aus Vakuumventil, Sicherheitsventil gegen Überdruck, Messtechnik und Reinigungstechnik in einer Tanksicherungsarmatur ist der zwingend senkrechte Einbau des Vakuumventils nachteilig. Weist die Tanksicherungsarmatur ein Kreuzstück mit einem Zentralanschluss auf, benötigt das Vakuumventil ein separates Eckgehäuse, welches zusätzliche Kosten bedingt, schlechter zu reinigen ist und den Platzbedarf vergrößert. Alternativ wird ein Tankdeckel benötigt, in welchem Vakuumventile eingebaut werden. Dies erhöht ebenso die Kosten und erfordert einen höheren Aufwand, da unter Umständen separate Reinigungsdüsen mit entsprechender Verrohrung erforderlich sind. Es ist auch bekannt, ein Vakuumventil oben auf dem Kreuzstück der Tanksicherungsarmatur anzubringen. In diesem Fall kann jedoch nur ein einziges Vakuumventil vorgesehen sein und ist die Bauweise für den Einbau der Reinigungseinrichtungen nachteilig. Ein weiterer Nachteil bekannter Vakuumventile ist das Verhalten bei der Reinigung. Um den Dichtsitz zu reinigen, wird bei angehobenem Ventilteller aus Düsen Reinigungsmedium in Richtung auf den Dichtsitz gesprüht, welches zumindest teilweise mit hoher Geschwindigkeit durch den Dichtsitz tritt. Ist eine Auffangvorrichtung nicht vorhanden oder unzureichend ausgelegt, resultiert dies in einer unerwünschten Verschmutzung der Außenseite des Tanks. Beim Anlüften des Ventiltellers entspricht oftmals der Tankdruck nicht dem Umgebungsdruck. Herrscht im Tank nur minimaler Überdruck, entsteht durch das enorme Tankvolumen eine starke Luftströmung (Abblasen) nach außen durch das Vakuumventil, die Tropfen des Reinigungsmediums mitreißt. Dadurch entsteht auf der Außenseite oben am Tank eine Sprühnebelwolke, die den Tank verunreinigt und im Extremfall Personen treffen kann. Ein weiterer Nachteil gewichtsbelasteter und vertikal verbauter Vakuumventile ist, dass sich bauartbedingt Schmutz direkt auf der Rückseite des Ventiltellers sammelt.

Aus einem Prospekt der Firma Albert Handtmann Armaturenfabrik GmbH und Co. KG, D-88400 Biberach an der Riss "Prozess- und Sicherheitsarmaturen" (www.handtmann.de), Seite 11, obere Abbildung, ist ein zum vertikalen Einbau ausgelegtes, federbelastetes Vakuumventil mit einer eine Ringschlitzöffnung des Gehäuses umgebenden Fangschale bekannt.

Aus einem Prospekt der Firma GEA Tuchenhagen, 02/2010, "Tanksicherungssystem VARI-TOP", Seite 10/3, ist eine Tanksicherungsarmatur mit einem über ein Eckgehäuse an einem Kreuzstück verbauten vertikalen Vakuumventil bekannt, das gemäß Seite 10/9 eine Ventilteller-Baugruppe mit Ventilteller, Ventilstange und Gewichtsbelastung sowie einer Linearführung im Gehäuse aufweist. Das Vakuumventil wird senkrecht verbaut und weist unterhalb einer Ringschlitzöffnung des Gehäuses eine kragenartige Auffangschale für Reinigungsmedien auf, aus der ein Ableitkanal nach unten führt.

Aus US 5048560 A ist eine Tanksicherungsarmatur bekannt, die ein gewichtsbelastetes Überdruckventil mit einer aufgestülpten Schutzkappe sowie ein Klappen-Vakuumventil mit Gewichtsbelastung aufweist. Der Ventilteller des Vakuumventils wird bei der schwenkenden Öffnungsbewegung in einem seitlichen Scharnier geführt. Die Gewichtsbelastung ist auf eine Ventilstange des Ventiltellers aufgefädelt. Alternativ kann anstelle einer Gewichtsbelastung eine Federvorspannung benutzt werden. Das Vakuumventil ist vertikal installiert.

Weiterer Stand der Technik ist enthalten in US 3 724 707 A, US 2011/056938 A1 und AU 618 316 B2.

Der Erfindung liegt die Aufgabe zugrunde, ein Vakuumventil anzugeben, bei welchem unabhängig von der Einbaulage bei einem Reinigungszyklus Reinigungsmedium sicher aufgefangen und auch bei Abblasen des Tanks mitgerissenes Reinigungsmedium effektiv abgeschieden wird, sowie einen Tank mit verbesserten Gebrauchseigenschaften zu schaffen.

Die gestellte Aufgabe wird mit den Merkmalen des Anspruchs 1 und des Anspruchs 11 gelöst.

Der am Gehäuse angeordnete, in der Auffangschale frei endende, z.B. konische, Ringflansch leitet wie eine Schürze oder ein Schirm im Zusammenspiel mit dem überbogenen einwärts gewölbten Außenbereich der Auffangschale Reinigungsmedium zuverlässig in die Auffangschale. Gleichzeitig bewirkt der Ringflansch, dass z.B. beim Abblasen des Tanks austretendes Luft-Reinigungsmedium-Gemisch um den Ringflansch herum auf dessen Rückseite geleitet wird. Die durch die starke Umlenkung erzeugten Fliehkräfte scheiden in dem Gemisch enthaltene Tropfen in der Auffangschale ab. Auf die Rückseite des Ringflansches auftreffenden Tropfen haften dort und laufen unter der Schwerkraft nach unten, bis sie schließlich durch die Radialrippe in die Auffangschale geleitet werden. Aus der Auffangschale wird gesammeltes Reinigungsmedium über den Ableitkanal gezielt entsorgt. Selbst bei liegender Ventilstange wird eine Verschmutzung des Tankaußenbereiches vermieden. Auch wird der Ventilteller durch aus der Außenumgebung stammenden Schmutz nicht verschmutzt. Das Vakuumventil kann auch vertikal eingebaut werden, allerdings dann ohne Schließfeder, wobei durch den Leichtbau der Ventilteller-Baugruppe und dem Gewicht das ordnungsgemäße Ansprechverhalten des Vakuumventils, beispielsweise bei ca. 3 mbar, gewährleistet ist und die Fangstruktur Reinigungsmedium beim Reinigungszyklus und beim Abblasen des Tanks sicher sammelt und abführt. Bei horizontalem Einbau des Vakuumventils wird kein Totraum an einem Kreuzstück der Tanksicherungsarmatur geschaffen, was bei der Reinigung deutliche Vorteile bietet, da der Dichtsitz direkt gegenüber der Reinigungsleitung oder von Düsen im Kreuzstück sitzt und gründlich gereinigt wird. Wegen der kostengünstigen Ausführung des Vakuumventils und dessen geringem Platzbedarf an einem Kreuzstück können zur Steigerung des Durchsatzes mehrere, auch redundant wirkende Vakuumventile verbaut werden.

Der Tank weist mit der Tanksicherungsarmatur ein verbessertes Betriebsverhalten auf, da beim Reinigen des Vakuumventils Verschmutzungen vermieden werden.

In einer Ausführung hat der den Ringflansch umgreifende Außenwand-Bereich der Auffangschale C-förmigen Querschnitt mit einem in Richtung zum Ringflansch gebogenen Schalenrand. Dieses Konzept bringt Reinigungsmedium zuverlässig in die Auffangschale.

Zweckmäßig hat der Ringflansch einen Konus-Öffnungswinkel zwischen etwa 180° und 120°, vorzugsweise etwa 130°. Diese Neigung begünstigt die Führung der Strömungen und das Abscheiden flüssiger Anteile des Reinigungsmediums.

Günstig ist ferner an dem um den Rand des Ringflansches herumgreifenden und einwärts gekrümmten Schalenrand im Bereich eines Ableitkanals eine Verbreiterung vorgesehen, die sich, vorzugsweise, über etwa jeweils 30° bis 60° beiderseits der Position des Ableitkanals erstreckt, das Abscheiden des Reinigungsmediums begünstigt und ein Herausblasen von Reinigungsmedium beim Abblasen des Tanks unterdrückt.

Die Verbreiterung kann ausgehend vom Schalenrand in Richtung vom Ringflansch weggebogen sein, z.B. mit konkaver Innenseite, um dort den Fangeffekt zu steigern.

Besonders zweckmäßig ist in Ausrichtung auf den Ableitkanal an der Außenseite des Gehäuses wenigstens eine z.B. den Ringflansch durchdringende, im Wesentlichen radial stehende Radialrippe vorgesehen, die dem Dichtsitz zugewandt im Abstand vom Ringflansch beginnt, vorzugsweise an einer Umfangsnut des Gehäuses, und sich in liegender Einbauposition des Vakuumventils z.B. achsparallel bis zum Grund der Auffangschale erstreckt. Die Radialrippe nutzt die Adhäsionsneigung des flüssigen Reinigungsmediums, um dieses unter Schwerkraft- und Fliehkraft-Einfluss zu sammeln und in die Auffangschale zu leiten. Aus dem physikalischen Zusammenspiel zwischen dem Ringflansch, dem einwärts gekrümmten Schalenrand und der Radialrippe resultiert eine hervorragende Abscheidewirkung für das Reinigungsmedium. Die optional vorgesehene Umfangsnut im Gehäuse definiert eine Grenzlinie, über die hinaus das Reinigungsmedium nicht gelangt oder in der Reinigungsmedium gesammelt und unter Schwerkraft zur Radialrippe geführt wird.

Zweckmäßig hat die Radialrippe einen gerundeten Beginn, in etwa gleichbleibende Wandstärke und in Richtung zum Boden der Auffangschale allmählich zunehmende Höhe, entweder mit einem im Wesentlichen geraden leicht abfallenden oder konkav gekrümmt in den Ringflansch einlaufenden Kamm. Diese Maßnahmen begünstigen das Ableiten des sich durch Adhäsion und/oder Fliehkraft an der Radialrippe sammelnden Reinigungsmediums in die Auffangschale und sind gusstechnisch günstig.

In einer Ausführungsform ist das Vakuumventil mit im Wesentlichen waagrecht liegender Ventilstange, einer Schließfeder und untenliegendem, im Wesentlichen horizontal mündendem Ableitkanal, oder in einer anderen Ausführung mit im Wesentlichen vertikal stehender Ventilstange, ohne Schließfeder und annähernd vertikal mündendem Ableitkanal in der Tanksicherungsarmatur oder im Tank installiert.

Herstellungstechnisch einfach und kostengünstig ist das Gehäuse mit der Fangschale, dem Ringflansch, der Radialrippe und dem Ableitkanal ein einstückiges Gußteil.

Schließlich ist es speziell für die liegende Einbauposition des Vakuumventils zweckmäßig, wenn der Ventilteller als dünnwandiger bombierter Blechformteil mit hohl ausgebildeter Ventilstange und einem Hubbegrenzungs-Anschlag an der Ventilstange als Leichtbau-Ventilteller-Baugruppe ausgebildet sind, deren aktiver Massenschwerpunkt zumindest im Endabschnitt des Hubs des Ventiltellers an den Dichtsitz zwischen zwei beabstandeten Führungslagern einer Führung der Ventilstange liegt. Aufgrund der Leichtbauweise und der Positionierung des aktiven Massenschwerpunkts bleiben Reibungskräfte der Ventilstange vernachlässigbar und entstehen keine Winkelfehler, so dass selbst eine relativ schwache Schließfeder einerseits das ordnungsgemäße Ansprechen auf Unterdruck im Tank und andererseits ein sicheres Schließen des Vakuumventils sicherstellen kann.

Anhand der Zeichnungen werden Ausführungsformen des Erfindungsgegenstandes erläutert. Es zeigen:
- Fig. 1: einen Achsschnitt einer als nicht beschränkendes Ausführungsbeispiel gezeigten Tanksicherungsstruktur eines Tanks mit einem liegend verbauten Vakuumventil,
- Fig. 2: einen Achsschnitt des Vakuumventils im geschlossenen Zustand, optional ausgerüstet mit einer Anlüftvorrichtung und einer Fangstruktur,
- Fig. 3: eine geschnittene Perspektivansicht eines Gehäuses des Vakuumventils,
- Fig. 4: einen Achsschnitt analog zu Fig. 2, bei auf Unterdruck ansprechendem Vakuumventil,
- Fig. 5: einen Achsschnitt analog zu Fig. 2 und Fig. 4, bei zu einem Reinigungszyklus gelüftetem Vakuumventil,
- Fig. 6: das Vakuumventil in senkrechter Einbaulage als Alternativlösung im Achsschnitt, und
- Fig. 7: ein Ausführungsbeispiel einer Tanksicherungsarmatur eines Tanks mit mehreren liegend verbauten Vakuumventilen.

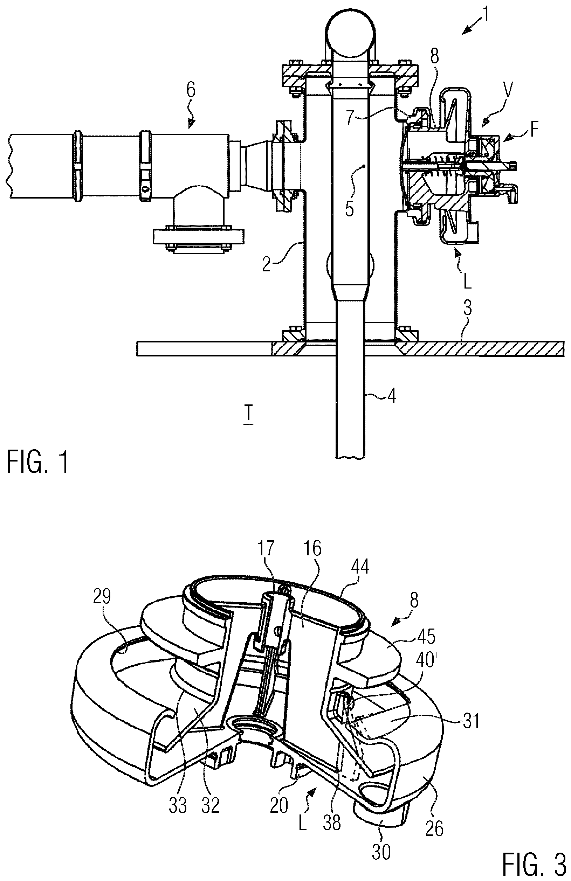

Fig. 1 verdeutlicht eine Tanksicherungsarmatur 1 für einen Tank T, der über mindestens eine Leitung z.B. an eine Getränkeabfüllanlage angeschlossen ist. Die Tanksicherungsarmatur ist hier ausgestattet mit mindestens einem in etwa waagerecht liegend verbauten Vakuumventil V und einem angedeuteten Überdruckventil 6. Das Vakuumventil V ist mit einem Gehäuse 8 an einem Anschlussflansch 7 montiert, der seitlich aus einem stehenden Kreuzstück 2 herausführt, das auf der Tankwand 3 oder einem Aufsatzfuß 3 montiert ist. Das Vakuumventil V kann als Option mit einer integrierten Fangstruktur L und/oder einer Anlüftvorrichtung F ausgestattet sein. Im Kreuzstück 2 ist z.B. zentral eine Reinigungssonde 4 mit Düsenöffnungen 5 installiert, die von oben gespeist werden kann. Das Vakuumventil V dient zur Unterdruckabsicherung des Tanks T und öffnet bei einem vorbestimmten Unterdruck selbsttätig eine Verbindung zur Außenumgebung. Normalerweise befindet sich das Vakuumventil in der gezeigten Schließstellung, in der es prozessbedingten Überdruck im Tank T aufnimmt. Zum Reinigen zumindest eines Dichtsitzes 44 des Vakuumventils V kann dieses durch die Lüftvorrichtung F angelüftet werden, wobei dann unter Druck appliziertes Reinigungsmedium in der Fangstruktur L aufgefangen und abgeleitet wird.

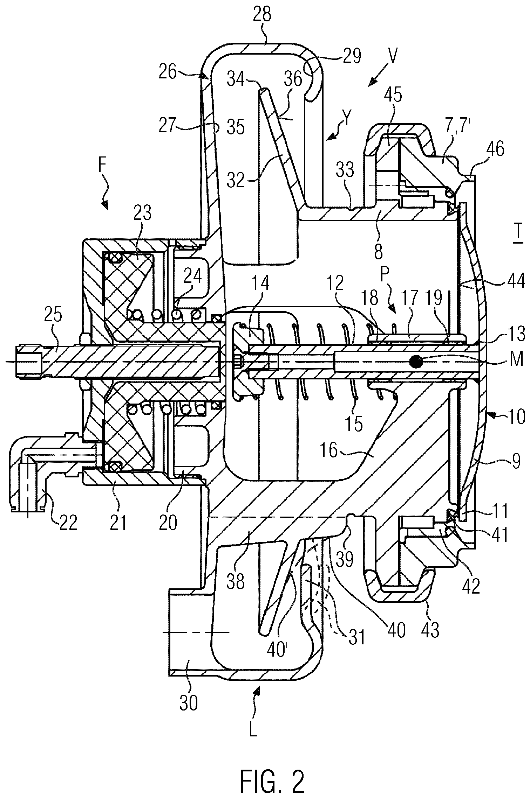

In Fig. 2 ist das Vakuumventil V in der Schließstellung gezeigt. Das Vakuumventil V weist im Gehäuse 8 eine Ventilteller-Baugruppe P auf, die in Leichtbauweise ausgeführt ist und einen Ventilteller 9 aus dünnwandigem Blech mit gleichbleibender Wandstärke mit einer zentralen Bombierung 10 nach rechts, einem peripheren flachen Dichtrand 11, sowie eine zentrale, hohl ausgebildete Ventilstange 12, die mit dem Ventilteller 9 verschweißt sein kann, und einen am freien Ende der Ventilstange 12 angebrachten Hubbegrenzungs-Anschlag 14 umfasst, der beispielsweise eingeschraubt ist.

Im Gehäuse 8 ist über mindestens einen Steg 16 zentral eine hier rohrförmige Führung 17 vorgesehen, in der zwei mit einem Abstand eingebaute Führungslager 18, 19 für die Ventilstange 12 untergebracht sind. Die Ventilstange 12 ist leichtgängig verschiebbar in den Führungslagern 18, 19 geführt. Die Führung 17 erstreckt sich in Fig. 2 nach rechts über die Ebene des am Gehäuse 8 geformten, hier ringförmigen Dichtsitzes 44 hinaus in Richtung zum Ventilteller 9. Der aktive Massenschwerpunkt M der Ventilteller-Baugruppe P in der Leichtbauausführung liegt zumindest bei Kontakt zwischen dem Ventilteller 9 und dem Dichtsitz 44 in etwa in der Mitte zwischen den beiden Führungslagern 18, 19, so dass aus der aufgrund der Leichtbauweise ohnedies geringen Gewichtskraft der Ventilteller-Baugruppe P Winkelfehler des Ventiltellers 9 in Bezug auf den Dichtsitz 44 vermieden werden. Zwischen dem Anschlag 14 und der Führung 17 ist eine Schließfeder 15 eingesetzt, die nach Entfernen des Anschlags 14 wegnehmbar oder/und austauschbar ist, die Schließkraft zum Anlegen des Ventiltellers 9 an den Dichtsitz 44 generiert, und das Ansprechverhalten auf Unterdruck auf der Seite des Ventiltellers 9 mitbestimmt.

Der Dichtsitz 44 ist mit einer Lippendichtung 41 aus elastomerem Material ausgestattet, die beispielsweise durch einen auf das Gehäuse 8 aufgebrachten Ringeinsatz 42 festgelegt ist und, beispielsweise, bei geschlossenem Vakuumventil mit dem Dichtrand 11 zusammenarbeitet. Unter Bezug auf Fig. 1 ist ferner in Fig. 2 ein Ringflansch 7, 7' gezeigt, der über den Ringeinsatz 42 gegen einen Befestigungsflansch 45 des Gehäuses 8 geschoben und beispielsweise durch eine lösbare Spannschelle 43 festgelegt ist, beispielsweise um das Vakuumventil am Kreuzstück 2 in Fig. 1 zu montieren. Der Ringflansch 7, 7' kann einen mit radialem Abstand über den Dichtsitz 44 vorstehenden Kragen 46 aufweisen, der zum Anschweißen dient, aber auch zur Strömungsführung, z.B. bei einem Reinigungszyklus, von Vorteil sein kann.

Alternativ kann das Vakuumventil V mit im Wesentlichen waagrecht liegender Ventilstange 12 auch an anderer Stelle des Tanks T verbaut sein.

Auf einen Ansatz 20 des Gehäuses 8 ist die Anlüftvorrichtung F aufgebracht, die einen Zylinder 21 mit einem gegen eine Rückstellfeder 24 verstellbaren Kolben 23 enthält, der über einen Pneumatikanschluss 22 mit Druckluft beaufschlagbar bzw. entlastbar ist und mit dem Anschlag 14 zusammenwirkt, um das Vakuumventil V anzulüften (siehe Fig. 3). Im Zylinder 21 kann ein Initiator 25 vorgesehen sein, um die Schließstellung des Ventiltellsers 9 zu überwachen. Die Anlüftvorrichtung F ist eine optionale Ausstattung des Vakuumventils V.

Als weitere Ausstattung des Vakuumventils V kann am Gehäuse 8 die Fangstruktur L angeformt sein. Diese umfasst eine kragenartige Auffangschale 26, deren Boden 27 nach außen und z.B. nach links geringfügig zurückweicht und zu einem hier horizontal mündenden Ableitkanal 30 führt. Die Auffangschale 26 besitzt einen etwa parallel zum Gehäuse verlaufenden, im Querschnitt C-förmigen Außenwandbereich 28, an welchen sich ein einwärts in Richtung zum Boden 27 überbogener Schalenrand 29 anschließt, der im Abstand vom Gehäuse 8 frei endet. Der Schalenrand 29 ist gebogen, um eine Führungsfläche für eine Luft- oder Reinigungsmediumströmung zu bilden, die ins Innere der Auffangschale 26 zielt. Die Auffangschale 26 ist an einer dem Dichtsitz 44 axial abgewandten Seite einer z.B. ringschlitzartigen, zur Außenumgebung offenen Öffnung Y des Gehäuses 8 angeordnet.

An der gegenüberliegenden Seite der Öffnung Y ist am Gehäuse 8 ein z.B. konischer Ringflansch 32 (Konus-Öffnungswinkel zwischen etwa 180° und 120°, z.B. etwa 130°) angeformt, der mit einem beispielsweise kreisrunden freien Rand 34 endet und sich vom Gehäuse 8 z.B. schräg in Richtung vom Dichtsitz 44 weg in die Auffangschale 26 hinein erstreckt. Der Ringflansch 32 bildet eine Schürze oder einen Schirm, hat eine zum Boden 27 weisende Unterseite 35 und eine zum Schalenrand 29 weisende Oberseite 36. Der Rand 34 wird vom Schalenrand 29 mit Abstand übergriffen, d.h., der Schalenrand 29 endet näher am Gehäuse 8 als der Rand 34.

Im Bereich des Ableitkanals 30 ist am Schalenrand 29 eine Verbreiterung 31 angeformt, die sich zu beiden Seiten der Position des Ableitkanals 30 über in etwa gleiche Winkelbereiche (z.B. 30° - 60°) erstreckt und nahe der Außenseite 36 des Ringflansches 32 endet. Die Fangstruktur L bildet einen um in etwa 180° umgelenkten Strömungsweg in das oder aus dem Vakuumventil V. Die Verbreiterung 31 kann (gestrichelt in Fig. 2 und 3) in Richtung vom Ringflansch 32 weg gebogen sein.

Ferner ist im Bereich des Ableitkanals 30 an der Außenseite des Gehäuses 8, z.B. beginnend an einer Umfangsnut 33, eine achsparallele Radialrippe 38 angeformt, welche z.B. den Ringflansch 32 durchdringt und in den Boden 27 der Auffangschale 26 einläuft. Der Beginn der Radialrippe 38 ist gerundet. Die Radialrippe 38 hat einen Kamm 40, dessen Höhe vom Beginn 39 bis zum Boden 27 der Auffangschale 26 allmählich zunimmt, so dass in liegender Einbauposition das Vakuumventil V zumindest der Abschnitt des Kamms 40 vom Beginn 39 bis zum Ringflansch 32 und oberhalb der Verbreitung 31 schräg nach links in die Auffangschale 26 abfällt. Gestrichelt alternativ ist in Fig. 2 und 3 angedeutet, dass der Kamm 40' konkav gekrümmt in den Ringflansch 32 eindringt.

Das Gehäuse 8 ist gemäß Fig. 3 zweckmäßig als einstückiges Gußteil ausgebildet und enthält ein- oder angeformt alle vorerwähnten, zum Gehäuse 8 gehörigen Komponenten des Vakuumventils.

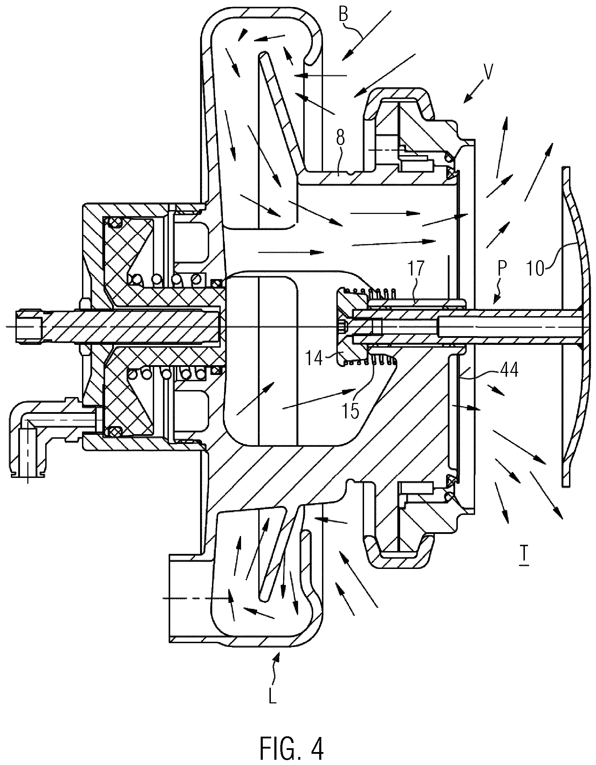

Fig. 4 verdeutlicht das Vakuumventil V nach Ansprechen auf einen unzulässigen Unterdruck im Tank T. Die Ventilteller-Baugruppe P ist gegen die Schließfeder 15 bis auf Kontakt des Anschlags 14 an der Führung 17 vom Dichtsitz 44 abgehoben. Umgebungsluft (Pfeile B) strömt durch die Fangstruktur L in das Gehäuse 8 und durch den Dichtsitz 44 in den Tank T. Dabei wird die Umgebungsluft (Pfeile B) in der Fangstruktur L mindestens 3-fach umgelenkt.

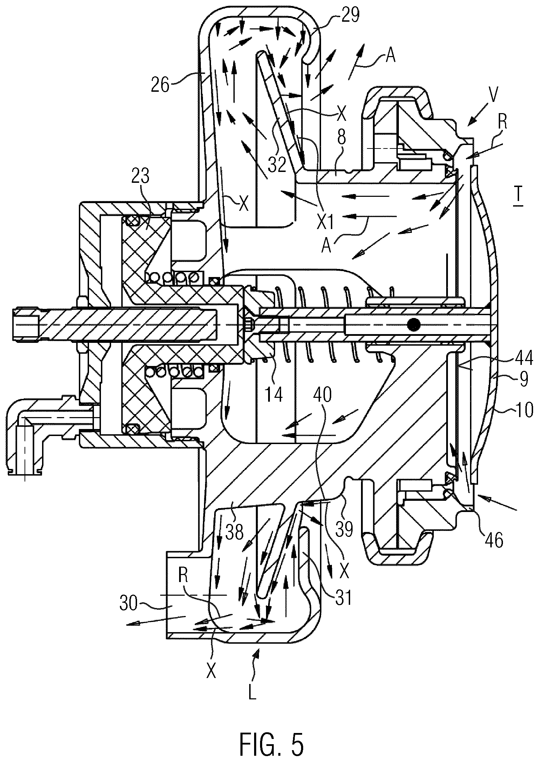

Fig. 5 verdeutlicht das Vakuumventil in angelüfteter Stellung durch Beaufschlagen des Kolbens 23 bis in dessen Endstellung, so dass der Ventilteller 9 in etwa nur bis auf die Höhe des Kragens 46 vom Dichtsitz 44 abgehoben ist. Unter Druck stehendes Reinigungsmedium (Pfeile R) strömt ggfs. zusammen mit Abluft (Pfeile A) aus dem Tank T in das Gehäuse 8, wobei der Ventilteller 9 an seinen Ober- und Unterseiten wie auch der Dichtsitz 44 gereinigt werden, und auch der Innenraum des Vakuumventils V. Die Mischung aus Abluft und Reinigungsmedium wird zunächst durch den Ringflansch 32 gegen den Boden der Auffangschale 26 geleitet, wobei sich flüssige Bestandteile aus dem Reinigungsmedium (Pfeile X) am Boden der Auffangschale 26 sammeln und unter Schwerkrafteinfluss nach unten zum Ableitkanal 30 strömen. Mit der Abluft (Pfeile A) mitgerissene flüssige Bestandteile des Reinigungsmediums gelangen auch in den Bereich des einwärts gewölbten Schalenrandes 29 und zur Außenseite 36 des Ringflansches 32, wobei sie sich durch Fliehkraftwirkung an der Außenseite 36 des Ringflansches 32 absetzen und zum Gehäuse 8 hin sowie zum Ableitkanal 30 nach unten geführt werden. Vom einwärts gewölbten Schalenrand 29 abtropfende flüssige Bestandteile fallen auf die Außenseite des Gehäuses 8 und fließen um dieses herum nach unten zur Radialrippe 38, an der sie durch Adhäsion haften und über den gerundeten Beginn 39 und den nach links abfallenden Kamm 40 oder 40' über die Verbreiterung 31 hinweg in Richtung zum Ableitkanal 30 geführt werden, während Abluft nach außen austritt. Über die Radialrippe 38 werden sogar aus dem Wirkbereich der Auffangschale 26 nach rechts ausgetretene Flüssigbestandteile des Reinigungsmediums zuverlässig zurück in die Auffangschale 26 gebracht. Dadurch unterbleibt eine Verschmutzung der Außenseite des Tanks.

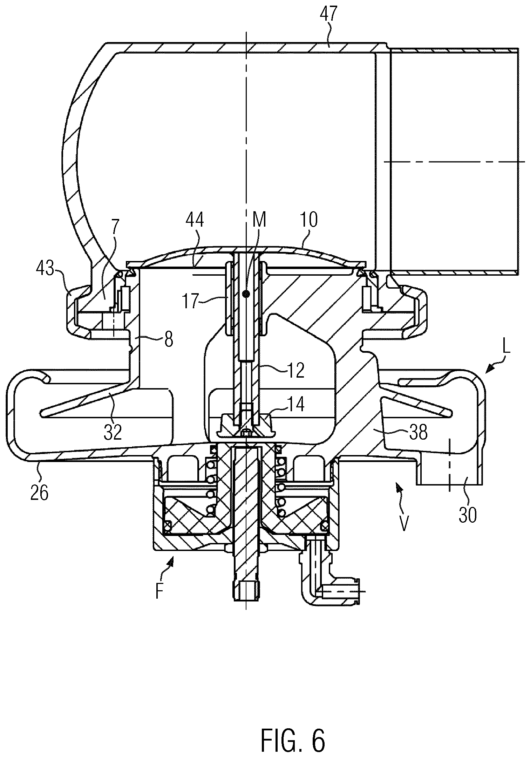

Fig. 6 verdeutlicht, dass das Vakuumventil V alternativ auch mit stehender Ventilstange 12 eingebaut werden kann, beispielsweise an einem unteren Anschlussflansch 7 eines Rohrkanals 47, wobei jedoch die in Fig. 2 gezeigte Schließfeder weggelassen ist und das Ansprechverhalten des Vakuumventils durch die Massenkraft im aktiven Massenschwerpunkt M bestimmt ist. Die Fangstruktur L sammelt auch hier bei einem Reinigungszyklus flüssige Bestandteile und führt sie über den hier vertikal nach unten mündenden Ableitkanal 30 ab.

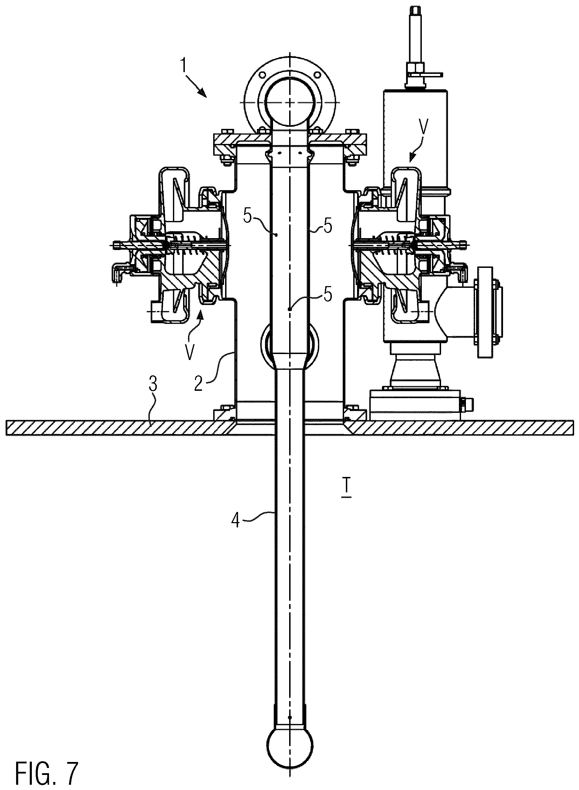

In Fig. 7 ist angedeutet, dass das Kreuzstück 2 der Tanksicherungsarmatur 1 in dieser Ausführungsform mit mindestens zwei Vakuumventilen V, jeweils mit liegender Ventilstange 12, ausgestattet ist, um einen höheren Durchsatz und/oder Redundanz zu gewährleisten. An dem Kreuzstück 2 können sogar mehr als zwei Vakuumventile V verbaut sein, die bei einem Reinigungszyklus angelüftet und aus den Düsenöffnungen 5 der Reinigungslanze 4 gereinigt werden.

Durch den horizontalen Einbau ist es möglich, das Vakuumventil V totraumfrei in das Kreuzstück 2 der Tanksicherungsarmatur 1 einzugliedern. Dies bietet wesentliche Vorteile bei der Reinigung, da der Dichtsitz 44 im Kreuzstück 2 direkt gegenüber der Reinigungsleitung bzw. der Düsen 5 der Reinigungssonde liegt und leicht gereinigt werden kann. Ein Eckgehäuse zum Installieren des Vakuumventils am Kreuzstück entfällt, was einen Kostenvorteil hat und Bauraum spart. Die Fangstruktur L ist sehr zuverlässig und wirkt beim Abblasen des Tanks T und Reinigen des Vakuumventils V als Fliehkraftabscheider für mitgerissenes Reinigungsmedium. Dadurch wird eine Verschmutzung der Tankaußenseite und eine Gefährdung in der Nähe befindlicher Personen verhindert. Durch die horizontale Anordnung des Vakuumventils und die Fangstruktur L wird eine Verschmutzung der Ventilteller-Rückseite durch Schmutz aus der Tankumgebung vermieden.

## Patentansprüche

1. Tanksicherungsarmatur (1) mit mindestens einem Vakuumventil (V), das in einem Gehäuse (8) einen Dichtsitz (44) und einen Ventilteller (9) aufweist, wobei das Gehäuse (8) dem Dichtsitz (44) abgewandt eine mit der Außenumgebung verbundene Öffnung (Y) für Zuluft, Abluft und/oder unter Druck stehendes Reinigungsmedium sowie an der Öffnung (Y) eine Auffangschale (26) aufweist, wobei an der dem Dichtsitz (44) zugewandten Seite der Öffnung (Y) ein Ringflansch (32) am Gehäuse (8) vorgesehen ist, der mit einem Rand (34) zumindest teilweise in der Auffangschale (26) frei endet, und die Auffangschale (26) und der Ringflansch (32) im Bereich der Öffnung (Y) einen mit mindestens einem Richtungswechsel versehenen Fliehkraft- und Abscheide-Strömungsweg begrenzen, **dadurch gekennzeichnet, dass** die an der anderen Seite der Öffnung (Y) angeordnete Auffangschale (26) einen im Abstand um den Rand (34) des Ringflansches (32) herumgreifenden Schalenrand (29) aufweist.

2. Tanksicherungsarmatur nach Anspruch 1, **dadurch gekennzeichnet, dass** der den Ringflansch (32) umgreifende Außenrand-Bereich (28) der Auffangschale (26) C-förmigen Querschnitt aufweist und an seinem Ende mit dem Schalenrand (29) in Richtung zum Ringflansch (32) gebogen ist.

3. Tanksicherungsarmatur nach Anspruch 1, **dadurch gekennzeichnet, dass** der Ringflansch (32) einen Konus-Öffnungswinkel zwischen etwa 180° und 120°, vorzugsweise etwa 130°, aufweist.

4. Tanksicherungsarmatur nach Anspruch 1, **dadurch gekennzeichnet, dass** der Schalenrand (29) im Bereich eines Ableitkanals (30) eine Verbreiterung (31) aufweist, vorzugsweise über etwa jeweils 30° bis 60° beiderseits der Position des Ableitkanals (30).

5. Tanksicherungsarmatur nach Anspruch 4, **dadurch gekennzeichnet, dass** die Verbreiterung (31) ausgehend vom Schalenrand (29) in Richtung vom Ringflansch (32) weg gebogen ist.

6. Tanksicherungsarmatur nach Anspruch 4, **dadurch gekennzeichnet, dass** in Ausrichtung auf den Ableitkanal (30) an der Außenseite des Gehäuses (8) wenigstens eine im Wesentlichen radiale Radialrippe (38) vorgesehen ist, die dem Dichtsitz (44) zugewandt im Abstand vom Ringflansch (32) beginnt, vorzugsweise an einer Umfangsnut (33) des Gehäuses (8), und sich in etwa achsparallel zum Boden (27) der Auffangschale (26) erstreckt.

7. Tanksicherungsarmatur nach Anspruch 6, **dadurch gekennzeichnet, dass** die Radialrippe (38) einen gerundeten Beginn (39), in etwa gleichbleibende Wandstärke und in Richtung zum Boden (27) der Auffangschale (26) allmählich zunehmende Höhe hat, vorzugsweise mit einem in waagerecht liegender Einbauposition des Vakuumventils (V) entweder im Wesentlichen gleichförmig abfallenden oder mit einer konkaven Krümmung in den Ringflansch (32) einlaufenden Kamm (40, 40').

8. Tanksicherungsarmatur nach Anspruch 1, **dadurch gekennzeichnet, dass** das Vakuumventil (V) entweder mit im Wesentlichen waagerecht liegender Ventilstange (12), einer Schließfeder (15) und unterliegendem und annähernd horizontal mündenden Ableitkanal (30), oder mit im Wesentlichen vertikal stehender Ventilstange (12), ohne Schließfeder und annähernd vertikal untenliegend mündendem Ableitkanal (30) in der Tanksicherungsarmatur (1) installiert ist.

9. Tanksicherungsarmatur nach Anspruch 1, **dadurch gekennzeichnet, dass** das Gehäuse (8) mit der Auffangschale (26), dem Ringflansch (32), der Radialrippe (38) und, vorzugsweise, dem Ableitkanal (30) ein einstückiges Gußteil ist.

10. Tanksicherungsarmatur nach wenigstens einem der vorhergehenden Ansprüche, **dadurch gekennzeichnet, dass** der Ventilteller (9) als dünnwandiger, bombierter Blechformteil mit der hohl ausgebildeten Ventilstange (12) und einem Hubbegrenzungs-Anschlag (14) an der Ventilstange (12) als Leichtbau-Ventilteller-Baugruppe (P) ausgebildet sind, deren aktiver Massenschwerpunkt (M) bei Einbau mit in etwa waagerecht liegender Ventilstange (12) zumindest im Endabschnitt des Hubs des Ventiltellers (9) zum Dichtsitz (44) zwischen zwei beabstandeten Führungslagern (18, 19) einer gehäusefesten Führung (17) der Ventilstange (12) liegt.

11. Tank (T) mit wenigstens einer Tanksicherungsarmatur (1) gemäß Anspruch 1, der über mindestens eine Leitung an eine Getränkeabfüllanlage anschließbar ist.

## Claims

1. Tank protection armature (1) comprising at least one vacuum valve (V) having a sealing seat (44) and a valve disc (9) in a housing (8), the housing (8) having remote from the sealing seat (44) an opening (Y) connected with the outer environment for inlet-air, outlet-air and/or a pressurized cleaning medium and as well having a collecting bowl (26) at the opening (Y), wherein at the one side of the opening (Y) facing the sealing seat (44), a ring flange (32) is provided at the housing (8), the ring flange (32) freely terminating with an edge (34) at least partially in the collecting bowl (26), the collecting bowl (26) and the ring flange (32) bounding a centrifugal force-and-separation flow path forming at least one flow direction change, **characterized in that** the collecting bowl (26) arranged at the other side of the opening (Y) has a bowl edge (29) extending with a distance around the edge (34) of the ring flange (32).

2. Tank protection armature according to claim (1), **characterized in that** an outer edge portion (28) of the collecting bowl (26) extending around the ring flange (32) has a C-shaped cross-section, the outer edge portion (28) being bent at its bowl edge end in a direction towards the ring flange (32).

3. Tank protection armature according to claim 1, **characterized in that** the ring flange (32) has a cone opening angle between about 180° and 120°, preferably about 130°.

4. Tank protection armature according to claim 1, **characterized in that** the bowl edge (29) has a broadening (31) in the region of a discharge channel (30), preferably over about respectively 30° to 60° at both sides of the position of the discharge channel (30).

5. Tank protection armature according to claim 4, **characterized in that** the broadening (31) starting from the bowl edge (29) is bent in a direction away from the ring flange (32).

6. Tank protection armature according to claim 4, **characterized in that** in alignment with the discharge channel (30), at least one essentially radial rib (38) is provided at the outer side of the housing (8), that the radial rib (38) facing the sealing seat (44) starts with a distance from the ring flange (32), preferably at a circumferential groove (33) of the housing (8), and extends substantially parallel to the axis towards a bottom (27) of the collecting bowl (26).

7. Tank protection armature according to claim 6, **characterized in that** the radial rib (38) has a rounded begin (39), substantially constant wall thickness and a height gradually increasing in a direction towards the bottom (27) of the collecting bowl (26), preferably with a crest (40, 40'), which in horizontal mounting position of the vacuum valve (V) either substantially uniformly slopes downwards or enters into the ring flange (32) with a concave curvature.

8. Tank protection armature according to claim 1, **characterized in that** the vacuum valve (V) is installed in the tank protection armature (1) either with a substantially horizontal valve rod (12), a closing spring (15) and a lower discharge channel (30) which opens substantially horizontally, or with a substantially vertically positioned valve rod (12) without a closing spring (15) and at the lower side a discharge channel (30) opening vertically.

9. Tank protection armature according to claim 1, **characterized in that** the housing (8) with the collecting bowl (26), the ring flange (32), the radial rib (38), and preferably, the discharge channel (30) is a unitary casted part.

10. Tank protection armature according to at least one of the preceding claims, **characterized in that** the valve disc (9) is formed as a thin-walled, curved sheet metal form part with the hollow valve rod (12) and a stroke limiting stop (14) at the valve rod (12) as a lightweight-valve disc-mounting group (B) when mounted with substantially horizontal valve rod (12), the active center of mass gravity (M) of which is situated at least in an end section of the stroke of the valve disc (9) towards the sealing seat (44) between two distant guiding bearings (18, 19) of a guidance (17) of the valve rod (12), the guidance (17) being fixed to the housing (8).

11. Tank (T) comprising at least one tank protection armature (1) according to claim 1, which tank can be connected via at least one piping to a beverage filling plant.

## Revendications

1. Système de robinetterie de sécurité (1) pour réservoir ou cuve, comprenant au moins une valve à vide (V), qui présente, dans un corps (8), un siège d'étanchéité (44) et un plateau d'obturation de valve (9), système
dans lequel le corps (8) présente, à l'opposé du siège d'étanchéité (44), une ouverture (Y) reliée à l'environnement extérieur et destinée à de l'air d'alimentation entrant, de l'air d'évacuation sortant et/ou du fluide de nettoyage sous pression, ainsi qu'une coupelle de collecte (26) au niveau de l'ouverture (Y), et
dans lequel sur le côté de l'ouverture (Y), qui est dirigé vers le siège d'étanchéité (44), il est prévu sur le corps (8), un flasque annulaire (32), qui, avec son bord (34), se termine librement, au moins en partie, dans la coupelle de collecte (26), et la coupelle de collecte (26) et le flasque annulaire (32) délimitent, dans la zone de l'ouverture (Y), un parcours d'écoulement de force centrifuge et de séparation comprenant au moins un changement de direction,
**caractérisé**
**en ce que** la coupelle de collecte (26) agencée sur l'autre côté de l'ouverture (Y), présente un bord de coupelle (29) entourant le bord (34) du flasque annulaire (32), à distance de celui-ci.

2. Système de robinetterie de sécurité de réservoir selon la revendication 1, **caractérisé en ce que** la zone de bord extérieur (28) de la coupelle de collecte (26), entourant le flasque annulaire (32), présente une section transversale en forme de C, et est courbée, à son extrémité, avec le bord de coupelle (29) en direction du flasque annulaire (32).

3. Système de robinetterie de sécurité de réservoir selon la revendication 1, **caractérisé en ce que** le flasque annulaire (32) présente un angle d'ouverture de cône entre environ 180° et 120°, de préférence d'environ 130°.

4. Système de robinetterie de sécurité de réservoir selon la revendication 1, **caractérisé en ce que** le bord de coupelle (29) présente, dans la zone d'un canal d'évacuation (30), un élargissement (31), respectivement de préférence sur environ 30° à 60° de part et d'autre de la position du canal d'évacuation (30).

5. Système de robinetterie de sécurité de réservoir selon la revendication 4, **caractérisé en ce que** l'élargissement (31) est coudé à partir du bord de coupelle (29) dans une direction s'éloignant du flasque annulaire (32).

6. Système de robinetterie de sécurité de réservoir selon la revendication 4, **caractérisé en ce qu'**en direction du canal d'évacuation (30), sur le côté extérieur du corps (8), il est prévu au moins une nervure radiale (38) au moins sensiblement radiale, qui débute à distance du flasque annulaire (32) en étant dirigée vers le siège d'étanchéité (44), de préférence au niveau d'une gorge périphérique (33) du corps (8), et qui s'étend environ parallèlement à l'axe, vers le fond (27) de la coupelle de collecte (26).

7. Système de robinetterie de sécurité de réservoir selon la revendication 6, **caractérisé en ce que** la nervure radiale (38) possède un début arrondi (39), une épaisseur de paroi restant sensiblement constante, et une hauteur augmentant progressivement en direction du fond (27) de la coupelle de collecte (26), de préférence avec une crête (40, 40') qui, dans une position d'implantation horizontale de la valve à vide (V), se raccorde, sensiblement selon une pente descendante uniforme ou avec une courbure concave, au flasque annulaire (32).

8. Système de robinetterie de sécurité de réservoir selon la revendication 1, **caractérisé en ce que** la valve à vide (V) est installée dans le système de robinetterie de sécurité de réservoir (1), soit avec une tige de valve (12) en position sensiblement horizontale, un ressort de fermeture (15) et un canal d'évacuation (30) situé dans le bas et débouchant sensiblement de manière horizontale, soit avec une tige de valve (12) sensiblement en position verticale, sans ressort de fermeture, et un canal d'évacuation (30) débouchant sensiblement de manière verticale dans le bas.

9. Système de robinetterie de sécurité de réservoir selon la revendication 1, **caractérisé en ce que** le corps (8) avec la coupelle de collecte (26), le flasque annulaire (32), la nervure radiale (38) et, de préférence, le canal d'évacuation (30), est une pièce moulée en une seule partie.

10. Système de robinetterie de sécurité de réservoir selon l'une au moins des revendications précédentes, **caractérisé en ce que** le plateau d'obturation de valve (9) en tant que pièce de forme en tôle, bombée, à paroi mince, est réalisée avec la tige de valve (12) de configuration creuse et une butée de limitation de course de déplacement (14) sur la tige de valve (12), sous la forme d'un sous-groupe de plateau d'obturation de valve (P) de construction allégée, dont le centre de gravité de masse (M) actif se situe, pour une implantation avec une tige de valve (12) en position sensiblement horizontale, au moins dans le secteur d'extrémité de la course de déplacement du plateau d'obturation de valve (9) en direction du siège d'étanchéité (44), entre deux paliers de guidage (18, 19) mutuellement espacés d'un guidage (17) de la tige de valve (12), fixe avec le corps.

11. Réservoir ou cuve (T) comprenant au moins un système de robinetterie de sécurité de réservoir (1) selon la revendication 1, qui peut être relié, par l'intermédiaire d'au moins une conduite, à une installation de conditionnement par remplissage, pour boissons.
